# EUROPEAN PATENT SPECIFICATION

(11) **EP 4 063 160 B1**
(45) Date of publication and mention of the grant of the patent: **30.07.2025**
(21) Application number: 22162484.4
(22) Date of filing: 16.03.2022
(51) Int. Cl.: B60K 1/04

(54) **UNDERCOVER STRUCTURE FOR A VEHICLE AND VEHICLE THEREWITH**
VERKLEIDUNGSSTRUKTUR FÜR EIN FAHRZEUG UND FAHRZEUG DAMIT
STRUCTURE DE CACHE POUR UN VÉHICULE ET VÉHICULE ÉQUIPÉ DE CETTE STRUCTURE

(30) Priority: 22.03.2021 JP 2021047026
(43) Date of publication of application: 28.09.2022
(73) Proprietor: Suzuki Motor Corporation, Hamamatsu-shi, Shizuoka 432-8611 (JP)
(72) Inventor: TAKAICHI, Kota, Hamamatsu-shi, 432-8611 (JP)
(74) Representative: Henkel & Partner mbB

(56) References cited:
- DE-A1- 102018 113 812
- JP-A- 2012 026 522
- US-B1- 7 913 788

## Description

### [Technical Field]

The present invention relates to an undercover structure for a vehicle having an undercover that covers a battery pack, located below a floor assembly of the vehicle, from below, and to a vehicle provided with the undercover structure.

### [Background Art]

In many cases, vehicles configured to be able to drive using a motor, for example, electric automobiles, each have a battery pack, which supplies the motor with electric power, arranged below a floor assembly. Such a vehicle has an undercover that covers the battery pack from below to protect it. In consideration of assembly efficiency, strength, etc., the undercover may be configured to connect a front panel and a rear panel located on a vehicle rear side of the front panel.

One example of the undercover structure for vehicle including the undercover is an undercover structure for vehicle in which: an undercover is configured such that it is divided into two parts, a front half (front panel) and a rear half (rear panel), which connect to each other; the front half has a connection part located at the rear end; the rear half has a connection part located at the front end; the connection part of the front half and the rear half are formed so as to extend linearly in the vehicle width direction and are connected to each other by bolting. (See, for example, JP 2013-147 070 A, in particular [0023] and [0024], and Figures 1 and 2.)

US 7 913 788 B1 discloses a vehicle and a system for mounting energy storage assemblies into the vehicle. An integrated energy storage and rear suspension assembly includes a battery support assembly that includes a propulsion battery pack mounted on a front sandwich panel, and a rear fuel tank/suspension module that includes a fuel tank assembly that is mounted on a rear sandwich panel. A structural joining plate with a flat bottom is attached from below to the flat bottom faces of the front and rear sandwich panels to connect between the bottom faces and structurally hold the two panels together when they are attached to a floor assembly of the vehicle from below.

### [Summary of Invention]

### [Problems to be Solved by the Invention]

However, in the one example of the undercover structure for a vehicle described in JP 2013-147 070 A, the connection parts of the front and rear panels are formed so as to extend linearly in the vehicle width direction, and are connected to each other only by bolting, so that sufficient rigidity cannot be ensured at the connection parts of the front and rear panels. In this case, if foreign matter such as pebbles and muddy water splashed up by a wheel, in particular by a front wheel, or obstacles such as steps of sidewalks, curbs, and car stoppers, on which the vehicle can ride over, collide against the undercover from the front and bottom of the vehicle, the undercover may not able to sufficiently absorb the impact caused by the collision.

Furthermore, in the one example of the undercover structure for vehicle described in JP 2013-147 070 A, when the bolts are fastened in the process of assembling the front and rear panels to produce the undercover, it is necessary to temporarily hold the front and rear panels in a state in which the connection parts of the front and rear panels are overlapped. Such a temporary holding operation is troublesome and may lead to a decrease in assembly efficiency of the undercover.

In view of the above circumstances, it is desired to improve rigidity of an undercover and assembly efficiency of an undercover in an undercover structure for a vehicle.

### [Means for Solving the Problems]

To solve the problems, an undercover structure for a vehicle according to the invention has the features of claim 1 and a vehicle provided with the undercover structure has the features of claim 4.

### [Advantageous Effects of Invention]

In the undercover structure for vehicle according to the invention, the rigidity of the undercover can be improved efficiently, and the undercover assembly efficiency can be improved.

### [Brief Description of Drawings]

[Figure 1] Figure 1 is an exploded perspective view schematically showing a vehicle having an undercover structure for vehicle according to the present embodiment in a state in which a battery pack and an undercover are disassembled.
[Figure 2] Figure 2 is a bottom view schematically showing an undercover structure for a vehicle according to the present embodiment.
[Figure 3] Figure 3 is a cross-sectional view taken along a line X-X of Figure 2.
[Figure 4] Figure 4 is a cross-sectional view taken along a line Y-Y of Figure 2.
[Figure 5] Figure 5 is a cross-sectional view taken along a line Z-Z of Figure 2.
[Figure 6] Figure 6 is a cross-sectional perspective view schematically showing a first engaging portion of a front panel and a second engaging portion of a rear panel, of the undercover according to the present embodiment, as viewed cross-sectionally along a Z-Z line of Figure 2 and viewed from the outside in a vehicle width direction.
[Figure 7] Figure 7 is a perspective view schematically showing a first overlapping area and a second overlapping area of the undercover according to the present embodiment as viewed from a vehicle rear side.
[Figure 8] Figure 8 is a perspective view schematically showing a front panel according to the present embodiment.
[Figure 9] Figure 9 is a perspective view schematically showing a rear panel according to the present embodiment.

### [Mode for Carrying Out the Invention]

An undercover structure for vehicle according to one embodiment is to be described together with a vehicle provided with the undercover structure. The vehicle provided with the undercover structure for a vehicle (hereinafter, simply referred to as "undercover structure", if necessary) according to the present embodiment is an electric automobile. However, the vehicle can also be an electric vehicle other than an electric automobile that can be provided with the undercover structure.

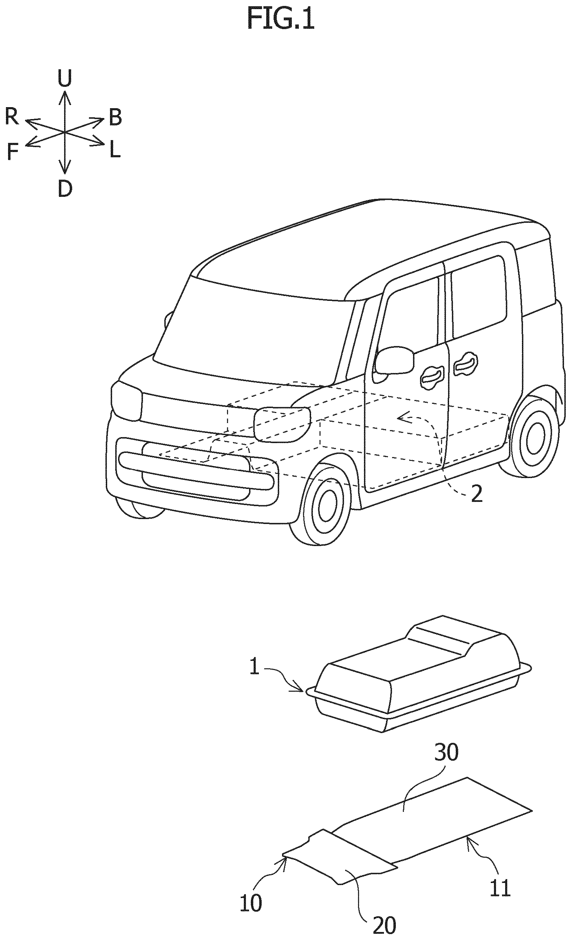

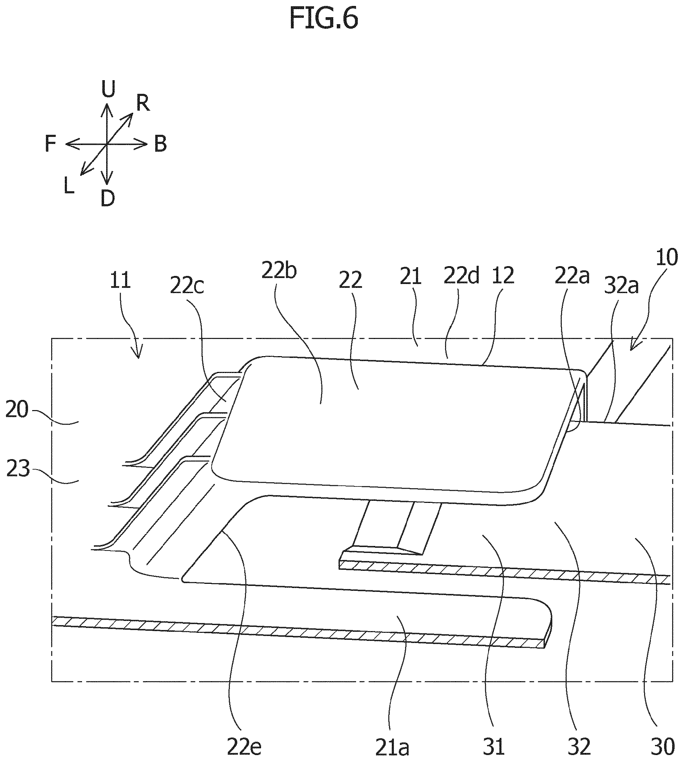

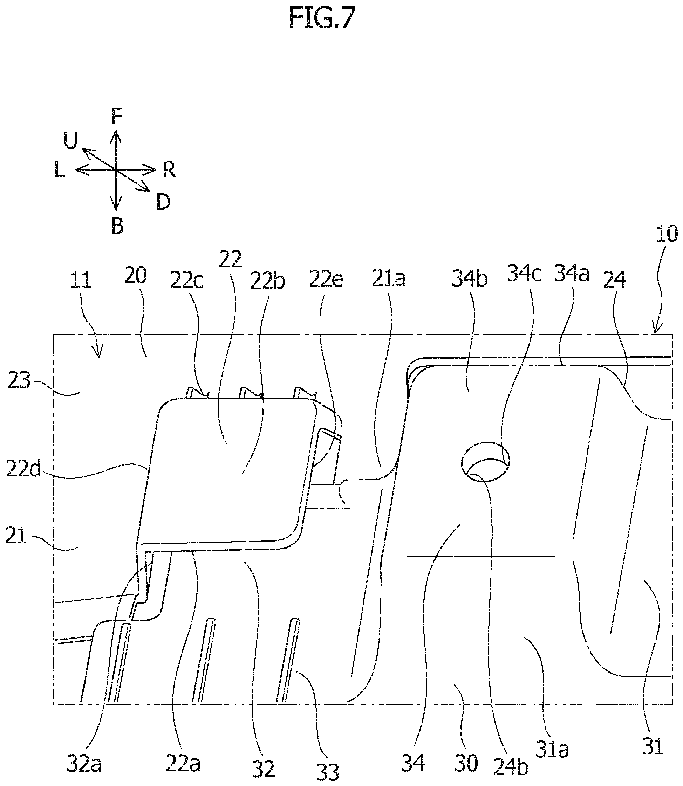

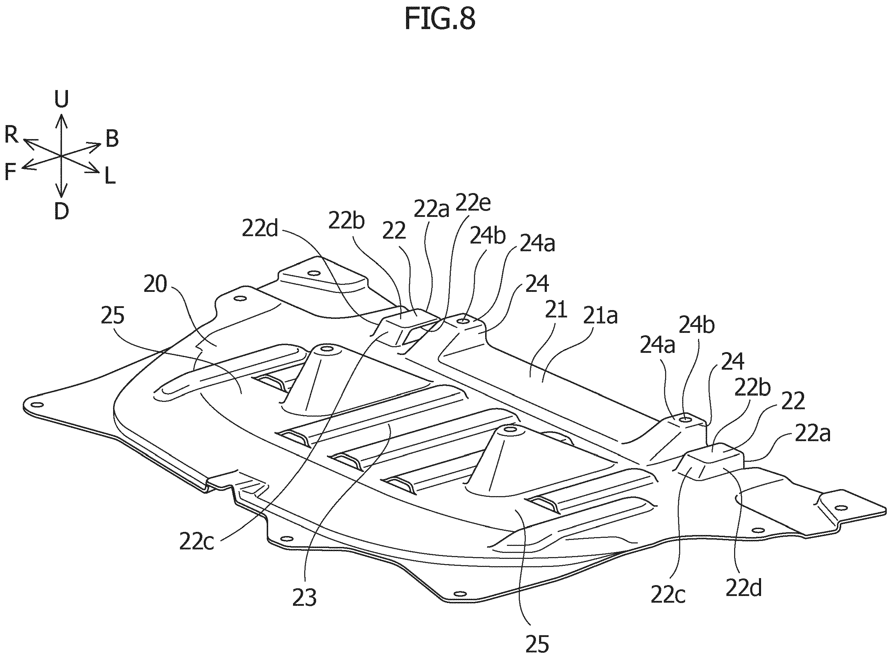

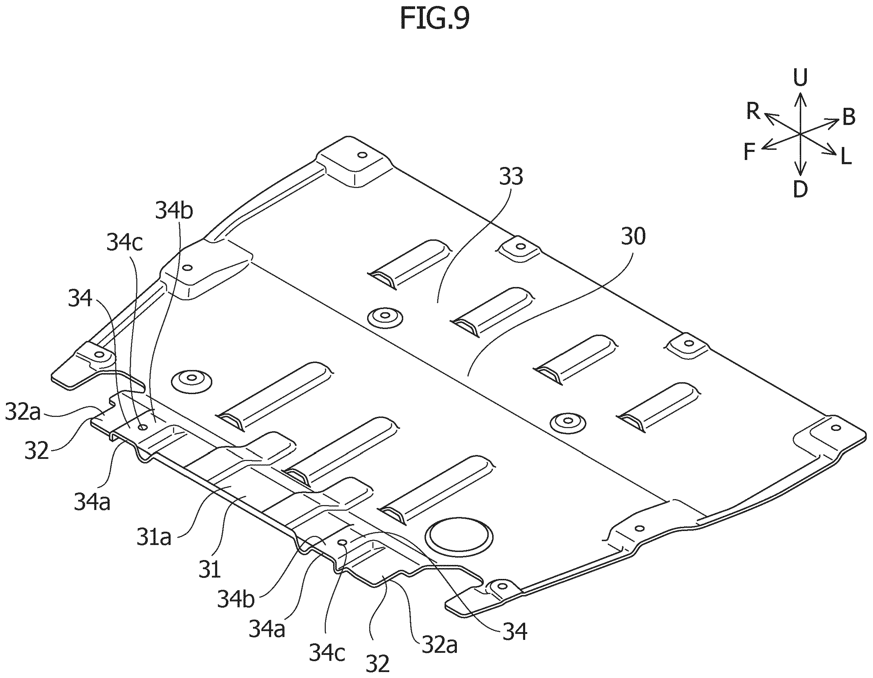

In Figures 1 to 9 used for the description herein, the direction with respect to the vehicle is indicated as follows. In Figures 1 to 3 and 5 to 9, the vehicle front side and the vehicle rear side are indicated by one-sided arrows F and one-sided arrows B, respectively. In Figures 1, 2, 4, and 6 to 9, the left side and the right side facing the vehicle front side are indicated by one-sided arrows L and one-sided arrows R, respectively. A vehicle width direction is indicated by a one-sided arrow L and one-sided arrow R. Furthermore, in Figures 1 and 3 to 9, the upside of the vehicle and the downside of the vehicle are indicated by one-sided arrows U and one-sided arrows D, respectively.

Note that the left side and right side are intended to mean the left side and right side facing the vehicle front side, respectively. The horizontal direction is intended to mean the direction extending in the vehicle front-rear direction and the vehicle width direction. In some cases, the upside of the vehicle and the downside of the vehicle are simply referred to as the upside and the downside, respectively.

### Outline of Undercover Structure for Vehicle and Vehicle

An outline of the undercover structure for vehicle 10 and the vehicle according to the present embodiment will be described with reference to Figures 1 to 9. In other words, the undercover structure for vehicle 10 and the vehicle according to the present embodiment are schematically configured as follows. The undercover structure for vehicle 10 is provided on the vehicle as shown in Figure 1. The vehicle has a battery pack 1 and a floor assembly 2. The battery pack 1 is located below the floor assembly 2. The undercover structure 10 has an undercover 11 that covers the battery pack 1 from below.

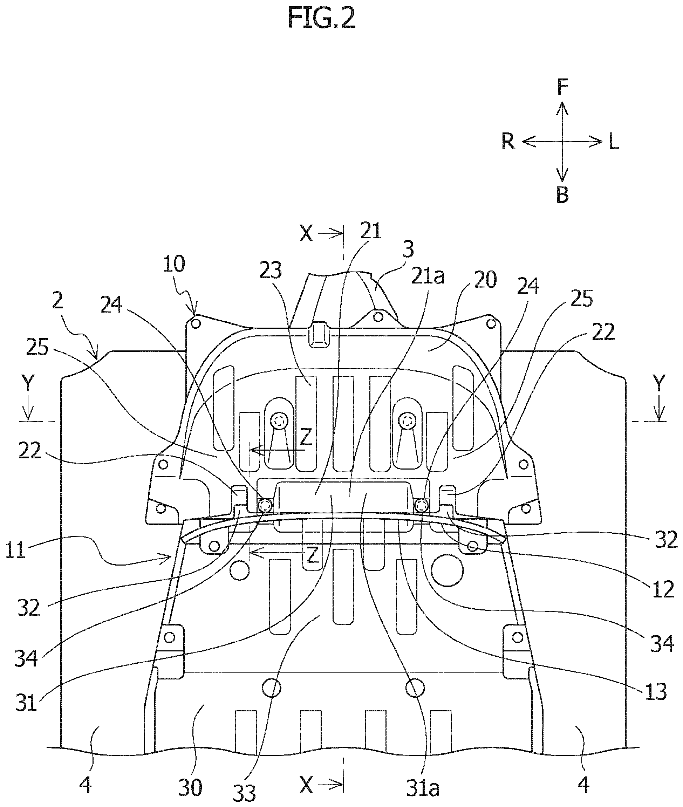

With reference to Figures 2 to 4, the undercover 11 has a front panel 20 and a rear panel 30 located on the vehicle rear side of the front panel 20. The undercover structure 10 has a coupling region 12 formed to couple the rear end region 21 of the front panel 20 in the vehicle front-rear direction with the front end region 31 of the rear panel 30 in the vehicle front-rear direction.

With reference to Figures 2, 3 and 5 to 9, the front panel 20 has a first engaging portion 22 located in its rear end region 21, and the rear panel 30 has a second engaging portion 32 located in its front end region 31. The first engaging portion 22 and the second engaging portion 32 are configured to engage with each other.

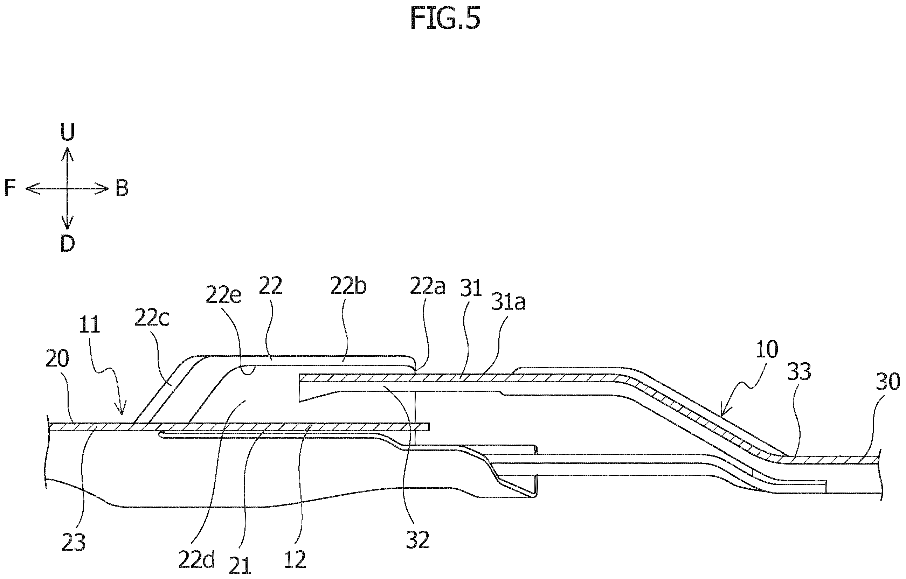

Furthermore, the undercover structure for vehicle 10 and the vehicle according to the present embodiment can be schematically configured as follows. With reference to Figures 5 to 8, the first engaging portion 22 has a rear side opening 22a formed to allow the second engaging portion 32 to be inserted therein in the direction from the vehicle front side to the vehicle rear side. The first engaging portion 22 has a top surface portion 22b that is offset upward with respect to a body portion 23 of the front panel 20 arranged in the vehicle horizontal direction. The rear side opening 22a is located at the rear end of the top surface portion 22b in the vehicle front-rear direction.

The first engaging portion 22 has a front side surface portion 22c located at the front end in the vehicle front-rear direction. The front side surface portion 22c rises upward from the body portion 23 of the front panel 20 to the front end of the top surface portion 22b in the vehicle front-rear direction. The first engaging portion 22 has a lateral side surface portion 22d located at the lateral end in the vehicle width direction. The lateral side surface portion 22d rises upward from the body portion 23 of the front panel 20 to the lateral end of the top surface portion 22b in the vehicle width direction. The rear side opening 22a is located at the rear end of the lateral side surface portion 22d in the vehicle front-rear direction.

With reference to Figures 5 to 9, the rear end region 21 of the front panel 20 has a first overlapping area 21a located in a shifted manner in the vehicle width direction with respect to the first engaging portion 22. The front end region 31 of the rear panel 30 has a second overlapping area 31a located in a shifted manner in the vehicle width direction with respect to the second engaging portion 32. The second engaging portion 32 is located on one side in the up-down direction with respect to the first engaging portion 22. The second overlapping area 31a is located on the other side in the up-down direction with respect to the first overlapping area 21a.

In a temporary holding state of the front and rear panels 20 and 30, the first and second engaging portions 22 and 32 engage with each other while overlapping in the up-down direction, and the first and second overlapping areas 21a and 31a are aligned in the vehicle width direction by engaging of the first and second engaging portions 22 and 32 while being spaced apart from each other in the up-down direction.

Furthermore, in a coupling state of the front and rear panels 20 and 30, the first and second engaging portions 22 and 32 engage with each other while being spaced apart from each other in the up-down direction, and the first and second overlapping areas 21a and 31a are coupled with each other while overlapping in the up-down direction.

### Details of the Vehicle

With reference to Figures 1 to 4, the vehicle can be configured in detail as follows. With reference to Figures 1, 3 and 4, the battery pack 1 for vehicle is configured to be capable of supplying electric power to a motor (not shown) used to drive the vehicle. Furthermore, the battery pack 1 is configured to be rechargeable.

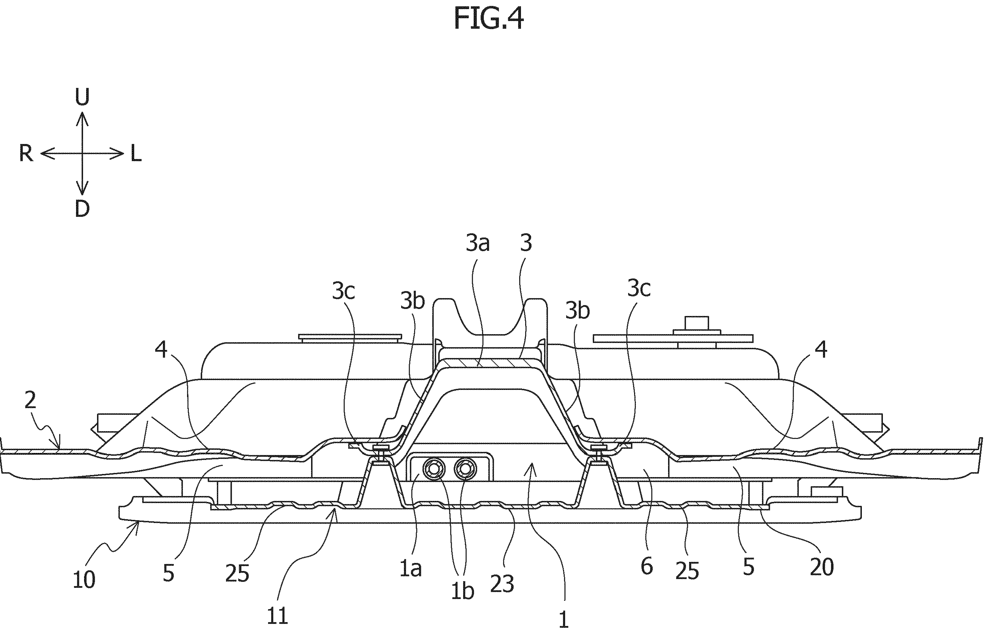

As shown in Figure 4, the battery pack 1 has a connector 1a connected to a high voltage cable 1b configured to be able to supply electric power to the outside and receive electric power from the outside of the battery pack 1. The connector 1a is arranged so as to overlap the floor tunnel 3 in the vehicle width direction.

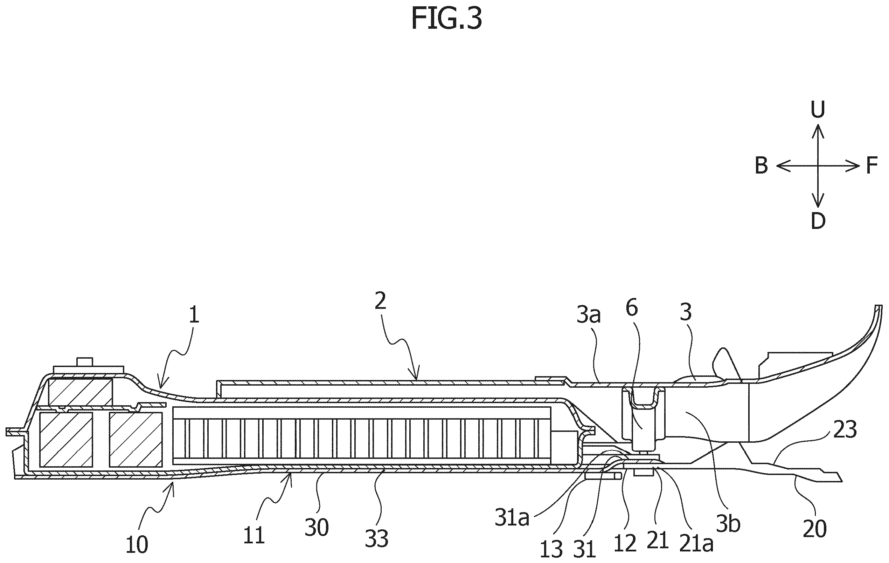

As shown in Figures 3 and 4, the floor assembly 2 has a floor tunnel 3 located substantially in the center in the vehicle width direction. The floor tunnel 3 is formed so as to bulge upward and extend in the vehicle front-rear direction.

With reference to Figures 2 to 4, the floor assembly 2 has two floor panels 4 respectively located on the opposite lateral sides with respect to the floor tunnel 3 in the vehicle width direction. With reference to Figure 4, the floor assembly 2 has two lateral cross members 5 respectively located below the two floor panels 4. With reference to Figures 3 and 4, the floor assembly 2 has a central cross member 6 located below the floor tunnel 3. The central cross member 6 extends so as to connect the two lateral cross members 5.

As shown in Figure 4, the floor tunnel 3 is formed so as to have a substantially hatshaped cross section. The floor tunnel 3 has a top surface portion 3a located at the upper end thereof. The floor tunnel 3 has two lateral surface portions 3b, each extending downward from each of the lateral ends of the top surface portion 3a in the vehicle width direction. The two lateral surface portions 3b are formed so as to increase the distance between the two lateral surface portions 3b from the upper part toward the lower part. The floor tunnel 3 has two flange portions 3c, each projecting from each of the lower ends of the two lateral surface portions 3b toward each of both the lateral sides in the vehicle width direction.

With reference to Figure 3, in the floor assembly 2, the two lateral cross members 5 and the central cross member 6 are in line in the vehicle width direction. The two lateral cross members 5 and the central cross member 6 extend in the vehicle width direction. The two lateral cross members 5 and the central cross member 6 are located so as to overlap the coupling region 12 of the undercover 11 in the vehicle front-rear direction.

With reference to Figure 4, the two lateral cross members 5 are respectively in contact with the two floor panels 4 in the up-down direction, and are respectively joined by welding to the two floor panels 4. With reference to Figures 3 and 4, the central cross member 6 is in contact with the floor tunnel 3 in the up-down direction, and is joined to the floor tunnel 3 by welding. However, these joins can also be obtained by joining means other than welding.

### Details of Front Panel

With reference to Figures 2 to 8, the front panel 20 can be configured in detail as follows. As shown in Figures 5 to 8, the first engaging portion 22 of the front panel 20 has a lateral opening 22e located at a lateral end opposite to the lateral side surface portion 22d in the vehicle width direction. In other words, the lateral side surface portion 22d is located at one side of lateral end of the first engaging portion 22 in the vehicle width direction, and the lateral opening 22e is located at the other side of lateral end of the first engaging portion 22 in the vehicle width direction.

The lateral opening 22e of the first engaging portion 22 of the front panel 20 is located at the other side of a lateral end of the top surface portion 22b in the vehicle width direction. The lateral opening 22e is located at the other side of a lateral end of the front side surface portion 22c in the vehicle width direction. The lateral opening 22e is connected to the rear side opening 22a.

The first overlapping area 21a of the rear end region 21 of the front panel 20 is located on the side of the lateral opening 22e of the first engaging portion 22, with respect to the first engaging portion 22. The first overlapping area 21a is adjacent to the first engaging portion 22 in the vehicle width direction. The front panel 20 has a first mounting portion 24 located in its first overlapping area 21a. The first mounting portion 24 is also located on the side of the lateral opening 22e of the first engaging portion 22, with respect to the first engaging portion 22.

The first mounting portion 24 of the front panel 20 is formed so as to bulge upward with respect to the body portion 23 of the front panel 20. The first mounting portion 24 has a top surface portion 24a located at the upper end thereof. The first mounting portion 24 has a mounting hole 24b that penetrates the top surface portion 24a. The top surface portion 24a of the first mounting portion 24 is located above the top surface portion 22b of the first engaging portion 22.

As shown in Figures 2 to 4 and 8, the front panel 20 has two lateral regions 25 respectively located on the opposite lateral sides with respect to the floor tunnel 3 in the vehicle width direction. Although not specifically shown, the two lateral regions 25 are located below the driver's seat and the passenger seat, respectively.

### Details of Rear Panel

With reference to Figures 2 to 7 and 9, the rear panel 30 can be configured in detail as follows. As shown in Figure 3, the rear panel 30 is in contact with the battery pack 1 in the up-down direction. As shown in Figures 2 to 7 and 9, the rear panel 30 has a body portion 33 arranged in the vehicle horizontal direction. The second engaging portion 32 of the rear panel 30 is formed so as to project from the body portion 33 of the rear panel 30 toward the vehicle front side.

In a temporary holding state of the front and rear panels 20 and 30, the lateral edge 32a located on one side of the second engaging portion 32 in the vehicle width direction is in contact with the lateral side surface portion 22d of the first engaging portion 22 of the front panel 20. The contact allows the front and rear panels 20 and 30 to be aligned in the vehicle width direction in the temporary holding state.

The second overlapping area 31a of the front end region 31 of the rear panel 30 is located on the side opposite to the lateral edge 32a of the second engaging portion 32 in the vehicle width direction with respect to the second engaging portion 32. The second overlapping area 31a is connected to the second engaging portion 32 in the vehicle width direction. The rear panel 30 has a second mounting portion 34 located in its second overlapping area 31a. The second mounting portion 34 is also located on the side opposite to the lateral edge 32a of the second engaging portion 32 in the vehicle width direction with respect to the second engaging portion 32.

The second mounting portion 34 of the rear panel 30 is formed so as to bulge upward with respect to the body portion 33 of the rear panel 30. The second mounting portion 34 has a front opening 34a formed to allow the first mounting portion 24 of the front panel 20 to be inserted in the direction from the vehicle front side to the vehicle rear side.

The second mounting portion 34 has a top surface portion 34b located at the upper end thereof. The second mounting portion 34 has a mounting hole 34c that penetrates the top surface portion 34b thereof. The top surface portion 34b of the second mounting portion 34 is located above the second engaging portion 32.

In a temporary holding state of the front and rear panels 20 and 30, the second mounting portion 34 of the rear panel 30 is aligned with the first mounting portion 24 in the vehicle width direction while being inserted into the first mounting portion 24 of the front panel 20. In a coupling state of the front and rear panels 20 and 30, the second mounting portion 34 is aligned with the first mounting portion 24 in the vehicle width direction and the up-down direction while being inserted into the first mounting portion 24.

### Details of Undercover

With reference to Figures 2 to 9, the undercover 11 can be configured in detail as follows. As shown in Figure 2, the undercover 11 has a battery pack guard 13 located below the front end region 31 of the rear panel 30.

The battery pack guard 13 is arranged so as to be adjacent to the coupling region 12 of the undercover 11 in the vehicle front-rear direction. The battery pack guard 13 is arranged in the vehicle width direction. The battery pack guard 13 extends over the entire front end region 31 of the rear panel 30. The battery pack guard 13 can be formed in a pipe shape.

With reference to Figures 5 to 9, the second engaging portion 32 of the rear panel 30 is located below the first engaging portion 22 of the front panel 20, and the second overlapping area 31a of the rear panel 30 is located above first overlapping area 21a of the front panel 20. However, the second engaging portion can be located above the first engaging portion and the second overlapping area can be located below the first overlapping area.

The front panel 20 has two first engaging portions 22 that are spaced apart from each other in the vehicle width direction, and the rear panel 30 has two second engaging portions 32 corresponding to each of the two first engaging portions 22.

However, a front panel can have one first engaging portion and a rear panel can have one second engaging portion corresponding to the one first engaging portion. Furthermore, a front panel can have three or more first engaging portions that are spaced apart from each other in the vehicle width direction, and a rear panel can have three or more second engaging portions, each corresponding to the three or more first engaging portions.

The two first engaging portions 22 are formed so as to be substantially symmetrical with respect to each other in the vehicle width direction. The two second engaging portions 32 are also formed so as to be substantially symmetrical with respect to each other in the vehicle width direction. The two first engaging portions 22 are respectively arranged on the opposite lateral sides with respect to the floor tunnel 3 in the vehicle width direction. The two second engaging portions 32 are also respectively arranged on the opposite lateral sides with respect to the floor tunnel 3 in the vehicle width direction.

The front panel 20 has one first overlapping area 21a located between the two first engaging portions 22 in the vehicle width direction, and the rear panel 30 has one second overlapping area 31a corresponding to the one first overlapping area 21a. However, a front panel can have two or more first overlapping areas that are spaced apart from each other in the vehicle width direction, and a rear panel can have two or more second overlapping areas, each corresponding to each of the two or more first overlapping areas.

The front panel 20 has two first mounting portions 24 that are spaced apart from each other in the vehicle width direction, and the rear panel 30 has two second mounting portions 34 corresponding to each of the two first mounting portions 24.

However, a front panel can have one first mounting portion and a rear panel can have one second mounting portion corresponding to the one first mounting portion. Furthermore, a front panel can have three or more first mounting portions that are spaced apart from each other in the vehicle width direction, and a rear panel can have three or more second mounting portions, each corresponding to each of three or more first mounting portions.

The two first mounting portions 24 are formed so as to be substantially symmetrical with respect to each other in the vehicle width direction. The two second mounting portions 34 are also formed so as to be substantially symmetrical with respect to each other in the vehicle width direction. The two first mounting portions 24 are respectively arranged on the opposite lateral sides with respect to the floor tunnel 3 in the vehicle width direction. The two second mounting portions 34 are also respectively arranged on the opposite lateral sides with respect to the floor tunnel 3 in the vehicle width direction.

As shown in Figure 3, in the coupling state of the front and rear panels 20 and 30, the first and second engaging portions 22 and 32 engage with each other while being spaced apart from each other in the up-down direction, and the first and second overlapping areas 21a and 31a, in particular, the first and second mounting portions 24 and 34 are fastened together with the central cross member 6 in a state in which they overlap in the up-down direction, by fastening means using bolts or screws and nuts.

However, a first overlapping area and a second overlapping area, in particular, a first mounting portion and a second mounting portion, can also be fastened together by fastening means using a bolt or screw and a nut, with one of the two lateral cross members instead of the central cross member, in a state in which they overlap in the up-down direction. For the fastening means, others than bolts or screws and nuts can be used, and the same also applies to the fastening means using bolts or screws and nuts described below.

Although not specifically shown, both the lateral edge portions of the front panel 20 in the vehicle width direction are respectively mounted on two side members (not shown) that are spaced apart from each other in the vehicle width direction, by fastening means using bolts or screws and nuts. The front edge portion of the front panel 20 in the vehicle front-rear direction is mounted on the suspension frame (not shown) by fastening means using bolts or screws and nuts. Both the lateral edge portions of the rear panel 30 in the vehicle width direction also are respectively mounted on two side members (not shown) that are spaced apart from each other in the vehicle width direction, by fastening means using bolts or screws and nuts.

### Method of Assembling Undercover

Here, a method of assembling the undercover 11 will be described below. First, the rear end region 21 of the front panel 20 and the front end region 31 of the rear panel 30 are arranged so as to be in contact with each other in the vehicle front-rear direction. The second engaging portions 32 and the second mounting portions 34, of the front end region 31 of the rear panel 30, are respectively inserted into the first engaging portion 22 and the first mounting portion 24 of the rear end region 21 of the front panel 20, through the rear side openings 22a and 24a thereof.

The front and rear panels 20 and 30 are temporarily held. In this temporary holding state, the first and second engaging portions 22 and 32 engage with each other while overlapping in the up-down direction, and the first and second overlapping areas 21a and 31a are aligned in the vehicle width direction by engaging of the first and second engaging portions 22 and 32 while being spaced apart from each other in the up-down direction. Furthermore, the first and second mounting portions 24 and 34 of the first and second overlapping areas 21a and 31a that overlap in the up-down direction, and the central cross member 6 located above these are fastened together by fastening means using bolts or screws and nuts.

The front and rear panels 20 and 30 are coupled. In this coupled state, the first and second engaging portions 22 and 32 engage with each other while being spaced apart from each other in the up-down direction, the first and second overlapping areas 21a and 31a are coupled to each other while overlapping in the up-down direction, and the first and second mounting portions 24 and 34 of the first and second overlapping areas 21a and 31a are mounted on the central cross member 6.

As described above, the undercover structure for vehicle 10 according to the present embodiment:
is an undercover structure for vehicle 10 including an undercover 11 that covers the battery pack 1, located below a vehicle floor assembly 2, from below, in which: the undercover 11 has a front panel 20 and a rear panel 30 located on the vehicle rear side of the front panel 20; and the rear end region 21 of the front panel 20 in the vehicle front-rear direction and the front end region 31 of the rear panel 30 in the vehicle front-rear direction are coupled; and
is configured such that: the front panel 20 has a first engaging portion 22 located in its rear end region 21, the rear panel 30 has a second engaging portion 32 located in its front end region 31, and the first engaging portion 22 and the second engaging portion 32 engage with each other.

In such an undercover structure 10, the front and rear panels 20 and 30 can be easily coupled by bolting or the like, in a state in which the front and rear panels 20 and 30 are temporarily held so as to engage the first engaging portion 22 of the front panel 20 and the second engaging portion 32 of the rear panel 30 with each other. Furthermore, the rigidity of the front panel 20 can be increased by the first engaging portion 22, the rigidity of the rear panel 30 can be increased by the second engaging portion 32, and the rigidity of the undercover 11 can be efficiently increased by the first and second engaging portions 22 and 32 that engage with each other in a state in which the front and rear panels 20 and 30 are coupled to each other. Therefore, the rigidity of the undercover 11 can be efficiently improved, and the assembly efficiency of the undercover 11 can be improved.

In the undercover structure for vehicle 10 according to the present embodiment, the first engaging portion 22 has a rear side opening 22a formed to allow the second engaging portion 32 to be inserted in the direction from the vehicle front side to the vehicle rear side. Therefore, the second engaging portion 32 is inserted into the first engaging portion 22 through the rear side opening 22a, so that the first and second engaging portions 22 and 32 can be easily engaged, enabling the assembly efficiency of the undercover 11 to be improved.

In the undercover structure for vehicle 10 according to the present embodiment, the first engaging portion 22 has a top surface portion 22b that is offset upward with respect to the body portion 23 of the front panel 20 arranged in the vehicle horizontal direction. The rear side opening 22a is located at the rear end of the top surface portion 22b in the vehicle front-rear direction.

In such an undercover structure 10, the top surface portion 22b of the first engaging portion 22 and the second engaging portion 32 are overlapped in the up-down direction, so that engaging of the first and second engaging portions 22 and 32 in the up-down direction allows the front and rear panels 20 and 30 to be efficiently temporarily held in the aligned state, enabling the assembly efficiency of the undercover 11 to be improved.

In the undercover structure for vehicle 10 according to the present embodiment, the first engaging portion 22 has the front side surface portion 22c that is located at a front end in the vehicle front-rear direction and rises upward from the body portion 23 of the front panel 20 to the front end of the top surface portion 22b in the vehicle front-rear direction.

In such an undercover structure 10, when the first engaging portion 22 is inserted more than necessary into the second engaging portion 32 in the direction from the front side to the rear side, the second engaging portion 32 comes in contact with the front side surface portion 22c of the first engaging portion 22, so that the front and rear panels 20 and 30 can be easily aligned in the vehicle front-rear direction, enabling the assembly efficiency of the undercover 11 to be improved.

In the undercover structure for vehicle 10 according to the present embodiment, the first engaging portion 22 has a lateral side surface portion 22d that is located at a lateral end in a vehicle width direction and rises upward from the body portion 23 of the front panel 20 to a lateral end of the top surface portion 22b in the vehicle width direction, and the rear side opening 22a is located at the rear end of the lateral side surface portion 22d in the vehicle front-rear direction.

In such an undercover structure 10, the lateral side surface portion 22d of the first engaging portion 22 is in contact with the second engaging portion 32 in the vehicle width direction, so that the front and rear panels 20 and 30 can be efficiently temporarily held in an aligned state in the vehicle width direction, enabling the assembly efficiency of the undercover 11 to be improved.

In the undercover structure for vehicle 10 according to the present embodiment, the rear end region 21 of the front panel 20 has a first overlapping area 21a located in a shifted manner in the vehicle width direction with respect to the first engaging portion 22, the front end region 31 of the rear panel 30 has a second overlapping area 31a located in a shifted manner in the vehicle width direction with respect to the second engaging portion 32, the second engaging portion 32 is located on one side in the up-down direction with respect to the first engaging portion 22, and the second overlapping area 31a is located on the other side in the up-down direction with respect to the first overlapping area 21a. In the temporary holding state of the front and rear panels 20 and 30, the first and second engaging portions 22 and 32 engage with each other while overlapping in the up-down direction, and the first and second overlapping areas 21a and 31a are aligned in the vehicle width direction by engaging of the first and second engaging portions 22 and 32 while being spaced apart from each other in the up-down direction. In the coupling state of the front and rear panels 20 and 30, the first and second engaging portions 22 and 32 engage with each other while being spaced apart from each other in the up-down direction, and the first and second overlapping areas 21a and 31a are coupled to each other while overlapping in the up-down direction.

In such an undercover structure 10, when the rear end region 21 of the front panel 20 and the front end region 31 of the rear panel 30 are overlapped in the up-down direction while being efficiently aligned in the vehicle width direction in the temporary holding state of the front and rear panels 20 and 30, they can be accurately coupled at the same time. Therefore, the assembly efficiency of the undercover 11 can be improved.

### [Reference Signs List]

1... battery pack, 2... floor assembly
10... undercover structure for vehicle (undercover structure), 11... undercover
20... front panel, 21... rear end region, 21a... first overlapping area, 22... first engaging portion, 22a... rear side opening, 22b... top surface portion, 22c... front side surface portion, 22d... lateral side surface portion, 23... body portion
30... rear panel, 31... front end region, 31a... second overlapping area, 32... second engaging portion

## Claims

1. An undercover structure (10) for a vehicle, comprising an undercover (11) that is to cover a battery pack (1) from below, the battery pack (1) being located below a floor assembly (2) of a vehicle,
the undercover (11) having a front panel (20) and a rear panel (30) located on a vehicle rear side of the front panel (20),
a rear end region (21) of the front panel (20) in a vehicle front-rear direction and a front end region (31) of the rear panel (30) in the vehicle front-rear direction being coupled,
wherein:
the front panel (20) includes a first engaging portion (22) located in the rear end region (21);
the rear panel (30) includes a second engaging portion (32) located in the front end region (31);
the first engaging portion (22) and the second engaging portion (32) are configured to engage with each other;
the first engaging portion (22) includes a rear side opening (22a) formed so that the second engaging portion (32) can be inserted in a direction from a vehicle front side toward a vehicle rear side;
the first engaging portion (22) includes a top surface portion (22b) that is offset upward with respect to a body portion (23) of the front panel (20) arranged in a vehicle horizontal direction;
**characterized in that**
the first engaging portion (22) includes a lateral side surface portion (22d) that is located at a lateral end of the first engaging portion (22) in a vehicle width direction and that rises upward from the body portion (23) of the front panel (20) to a lateral end of the top surface portion (22b) in the vehicle width direction;
the rear side opening (22a) is located at a rear end of the top surface portion (22b) in the vehicle front-rear direction and at a rear end of the lateral side surface portion (22d) in the vehicle front-rear direction; and
the second engaging portion (32) has a lateral edge (32a) located on one side of the second engaging portion (32) in the vehicle width direction so that the lateral edge (32a) can be in contact with the lateral side surface portion (22d) of the first engaging portion (22) of the front panel (20) in a temporary holding state of the front and rear panels (20,30).

2. The undercover structure (10) for a vehicle according to claim 1, wherein
the first engaging portion (22) includes a front side surface portion (22c) that is located at a front end of the first engaging portion (22) in the vehicle front-rear direction and that rises upward from the body portion (23) of the front panel (20) to a front end of the top surface portion (22b) in the vehicle front-rear direction.

3. The undercover structure (10) for a vehicle according to claim 1 or 2, wherein:
the rear end region (21) of the front panel (20) includes a first overlapping area (21a) located in a shifted manner in the vehicle width direction with respect to the first engaging portion (22);
the front end region (31) of the rear panel (30) includes a second overlapping area (31a) located in a shifted manner in the vehicle width direction with respect to the second engaging portion (32);
the second engaging portion (32) is located on one side in the up-down direction with respect to the first engaging portion (22);
the second overlapping area (31a) is located on another side in the up-down direction with respect to the first overlapping area (21a);
in the temporary holding state of the front and rear panels (20,30), the first and second engaging portions (22,32) engage with each other while overlapping in the up-down direction, and the first and second overlapping areas (21a,31a) are aligned in the vehicle width direction by engaging of the first and second engaging portions (22,32) while being spaced apart from each other in the up-down direction; and
in a coupling state of the front and rear panels (20,30), the first and second engaging portions (22,32) engage while being spaced apart from each other in the up-down direction, and the first and second overlapping areas (21a,31a) are coupled to each other while overlapping in the up-down direction.

4. A vehicle comprising
a battery pack (1) and a floor assembly (2), the battery pack (1) located below the floor assembly (2) of the vehicle, and
an undercover structure (10) for a vehicle according to any one of claims 1 to 3 provided on the vehicle such that the undercover (11) of the undercover structure (10) covers the battery pack (1) from below.
the undercover (11) having a front panel (20) and a rear panel (30) located on a vehicle rear side of the front panel (20),

## Patentansprüche

1. Verkleidungsstruktur (10) für ein Fahrzeug, umfassend eine Verkleidung (11), um eine Batteriepackung (1) von unten abzudecken, wobei die Batteriepackung (1) unter einer Bodenbaugruppe (2) eines Fahrzeugs angeordnet ist,
wobei die Verkleidung (11) eine Frontplatte (20) und eine Rückplatte (30), die auf einer Fahrzeugrückseite der Frontplatte (20) angeordnet ist,
ein hinterer Endbereich (21) der Frontplatte (20) in einer Vorne-Hinten-Richtung des Fahrzeugs und ein vorderer Endbereich (31) der Rückplatte (30) in der Vorne-Hinten-Richtung des Fahrzeugs gekoppelt sind,
wobei:
die Frontplatte (20) einen ersten Eingreifabschnitt (22) umfasst, der sich im hinteren Endabschnitt (21) befindet; die Rückplatte (30) einen zweiten Eingreifabschnitt (32) umfasst, der sich im vorderen Endabschnitt (31) befindet;
der erste Eingreifabschnitt (22) und der zweite Eingreifabschnitt (32) so konfiguriert sind, dass sie miteinander in Eingriff kommen;
der erste Eingreifabschnitt (22) eine rückseitige Öffnung (22a) umfasst, die so ausgebildet ist, dass der zweite Eingreifabschnitt (32) in einer Richtung von einer Vorderseite eines Fahrzeugs zu einer Rückseite des Fahrzeugs eingesetzt werden kann;
der erste Eingreifabschnitt (22) einen oberen Oberflächenabschnitt (22b) umfasst, der in Bezug auf einen Körperabschnitt (23) der Frontplatte (20), der in einer Horizontalrichtung eines Fahrzeugs angeordnet ist, nach oben versetzt ist; **dadurch gekennzeichnet, dass**
der erste Eingreifabschnitt (22) einen seitlichen Seitenoberflächenabschnitt (22d) umfasst, der an einem seitlichen Ende des ersten Eingreifabschnitts (22) in einer Fahrzeug-Querrichtung angeordnet ist und sich von dem Körperabschnitt (23) der Frontplatte (20) zu einem seitlichen Ende des oberen Oberflächenabschnitts (22b) in der Fahrzeug-Querrichtung nach oben erhebt;
die hintere Seitenöffnung (22a) an einem hinteren Ende des oberen Oberflächenabschnitts (22b) in der Vorne-Hinten-Richtung des Fahrzeugs und an einem hinteren Ende des seitlichen Seitenoberflächenabschnitts (22d) in der Vorne-Hinten-Richtung des Fahrzeugs angeordnet ist; und
der zweite Eingreifabschnitt (32) einen seitlichen Rand (32a) aufweist, der auf einer Seite des zweiten Eingreifabschnitts (32) in der Fahrzeug-Querrichtung angeordnet ist, so dass der seitliche Rand (32a) in einem temporären Haltezustand der vorderen und hinteren Verkleidungen (20, 30) mit dem seitlichen Seitenflächenabschnitt (22d) des ersten Eingreifabschnitts (22) der vorderen Verkleidung (20) in Kontakt sein kann.

2. Die Verkleidungsstruktur (10) für ein Fahrzeug gemäß Anspruch 1, wobei
der erste Eingreifabschnitt (22) einen Abschnitt (22c) der Vorderseite umfasst, der sich an einem vorderen Ende des ersten Eingreifabschnitts (22) in der Vorne-hinten-Richtung des Fahrzeugs befindet und der sich von dem Körperabschnitt (23) der Frontplatte (20) zu einem vorderen Ende des Abschnitts (22b) der Oberseite in der Vorne-hinten-Richtung des Fahrzeugs nach oben erhebt.

3. Die Verkleidungsstruktur (10) für ein Fahrzeug gemäß Anspruch 1 oder 2, wobei:
der hintere Endbereich (21) der Frontplatte (20) einen ersten Überlappungsbereich (21a) umfasst, der in einer verschobenen Weise in der Fahrzeug-Querrichtung in Bezug auf den ersten Eingreifabschnitt (22) angeordnet ist;
der vordere Endbereich (31) der Rückplatte (30) einen zweiten Überlappungsbereich (31a) umfasst, der in einer verschobenen Weise in der Fahrzeug-Querrichtung in Bezug auf den zweiten Eingreifabschnitt (32) angeordnet ist;
der zweite Eingreifabschnitt (32) befindet sich auf einer Seite in der Oben-Unten-Richtung bezüglich des ersten Eingreifabschnitts (22);
der zweite Überlappungsbereich (31a) befindet sich auf einer anderen Seite in der Oben-Unten-Richtung bezüglich des ersten Überlappungsbereichs (21a);
im temporären Einrückszustand der vorderen und hinteren Platten (20, 30) greifen die ersten und zweiten Eingreifabschnitte (22, 32) ineinander, während sie sich in der Auf-Ab-Richtung überlappen, und die ersten und zweiten Überlappungsbereiche (21a, 31a) werden in der Fahrzeug-Querrichtung durch Eingreifen der ersten und zweiten Eingreifabschnitte (22, 32) ausgerichtet, während sie in der Auf-Ab-Richtung voneinander beabstandet sind; und
in einem Kopplungszustand der vorderen und hinteren Platten (20, 30) greifen die ersten und zweiten Eingreifabschnitte (22, 32) ineinander, während sie in der Oben-Unten-Richtung voneinander beabstandet sind, und die ersten und zweiten Überlappungsbereiche (21a, 31a) sind miteinander gekoppelt, während sie in der Oben-Unten-Richtung überlappen.

4. Ein Fahrzeug, umfassend
eine Batteriepackung (1) und eine Bodengruppe (2), wobei die Batteriepackung (1) unterhalb der Bodengruppe (2) des Fahrzeugs angeordnet ist, und
eine Verkleidungsstruktur (10) für ein Fahrzeug gemäß einem der Ansprüche 1 bis 3, die an dem Fahrzeug so vorgesehen ist, dass die Verkleidung (11) der Verkleidungsstruktur (10) die Batteriepackung (1) von unten abdeckt,
die Verkleidung (11) eine Frontplatte (20) und eine Rückplatte (30) auf weist, die sich auf einer Fahrzeughinterseite der Frontplatte (20) befindet.

## Revendications

1. Structure de cache (10) pour un véhicule, comprenant un cache (11) destiné à recouvrir un bloc-batterie (1) par le dessous, le bloc-batterie (1) étant situé sous un ensemble de plancher (2) d'un véhicule,
le cache (11) comportant un panneau avant (20) et un panneau arrière (30) situé sur un côté arrière du véhicule par rapport au panneau avant (20),
une région d'extrémité arrière (21) du panneau avant (20) dans une direction avant-arrière du véhicule et une région d'extrémité avant (31) du panneau arrière (30) dans la direction avant-arrière du véhicule étant couplées,
dans laquelle :
le panneau avant (20) comprend une première partie d'engagement (22) située dans la région d'extrémité arrière (21) ;
le panneau arrière (30) comprend une deuxième partie d'engagement (32) située dans la région d'extrémité avant (31) ;
la première partie d'engagement (22) et la deuxième partie d'engagement (32) sont configurées pour s'engager l'une avec l'autre ;
la première partie d'engagement (22) comprend une ouverture arrière (22a) formée de telle sorte que la deuxième partie d'engagement (32) puisse être insérée dans une direction allant du côté avant du véhicule vers le côté arrière du véhicule ;
**caractérisé en ce que**
la première partie d'engagement (22) comprend une partie de surface supérieure (22b) qui est décalée vers le haut par rapport à une partie de corps (23) du panneau avant (20) disposée dans une direction horizontale du véhicule ;
la première partie d'engagement (22) comprend une partie de surface latérale (22d) qui est située à une extrémité latérale de la première partie d'engagement (22) dans une direction de largeur du véhicule et qui s'élève vers le haut depuis la partie de corps (23) du panneau avant (20) jusqu'à une extrémité latérale de la partie de surface supérieure (22b) dans la direction de largeur du véhicule ;
l'ouverture latérale arrière (22a) est située à une extrémité arrière de la partie de surface supérieure (22b) dans la direction avant-arrière du véhicule et à une extrémité arrière de la partie de surface latérale (22d) dans la direction avant-arrière du véhicule ; et
la deuxième partie d'engagement (32) comporte un bord latéral (32a) situé sur un côté de la deuxième partie d'engagement (32) dans la direction de la largeur du véhicule de sorte que le bord latéral (32a) puisse être en contact avec la partie de surface latérale (22d) de la première partie d'engagement (22) du panneau avant (20) dans un état de maintien temporaire des panneaux avant et arrière (20, 30).

2. Structure de cache (10) pour un véhicule selon la revendication 1, dans laquelle
la première partie d'engagement (22) comprend une partie de surface latérale avant (22c) qui est située à une extrémité avant de la première partie d'engagement (22) dans la direction avant-arrière du véhicule et qui s'élève vers le haut depuis la partie de corps (23) du panneau avant (20) jusqu'à une extrémité avant de la partie de surface supérieure (22b) dans la direction avant-arrière du véhicule.

3. Structure de cache (10) pour un véhicule selon la revendication 1 ou 2, dans laquelle :
la région d'extrémité arrière (21) du panneau avant (20) comprend une première zone de chevauchement (21a) située de manière décalée dans la direction de la largeur du véhicule par rapport à la première partie d'engagement (22) ;
la région d'extrémité avant (31) du panneau arrière (30) comprend une deuxième zone de chevauchement (31a) située de manière décalée dans la direction de la largeur du véhicule par rapport à la deuxième partie d'engagement (32) ;
la deuxième partie d'engagement (32) est située sur un côté dans la direction haut-bas par rapport à la première partie d'engagement (22) ;
la deuxième zone de chevauchement (31a) est située sur un autre côté dans la direction haut-bas par rapport à la première zone de chevauchement (21a) ;
dans l'état de maintien temporaire des panneaux avant et arrière (20, 30), les première et deuxième parties d'engagement (22, 32) s'engagent l'une dans l'autre tout en se chevauchant dans la direction haut-bas, et les première et deuxième zones de chevauchement (21a, 31a) sont alignées dans la direction de la largeur du véhicule par l'engagement des première et deuxième parties d'engagement (22, 32) tout en étant espacées l'une de l'autre dans la direction haut-bas ; et
dans un état d'accouplement des panneaux avant et arrière (20, 30), les première et deuxième parties d'engagement (22, 32) s'engagent tout en étant espacées l'une de l'autre dans la direction verticale, et les première et deuxième zones de chevauchement (21a, 31a) sont accouplées l'une à l'autre tout en se chevauchant dans la direction verticale.

4. Véhicule comprenant
un bloc-batterie (1) et un ensemble de plancher (2), le bloc-batterie (1) étant situé sous l'ensemble de plancher (2) du véhicule, et
une structure de cache-batterie (10) pour un véhicule selon l'une quelconque des revendications 1 à 3, prévue sur le véhicule de telle sorte que le cache (11) de la structure de cache-batterie (10) recouvre le bloc-batterie (1) par le dessous,
le cache (11) comportant un panneau avant (20) et un panneau arrière (30) situé sur un côté arrière du véhicule du panneau avant (20).
